# FASCICULE DE BREVET EUROPEEN

(11) **EP 3 944 981 B1**
(45) Date de publication et mention de la délivrance du brevet: **13.03.2024**
(21) Numéro de dépôt: 21187591.9
(22) Date de dépôt: 26.07.2021
(51) Int. Cl.: B60L 53/14, B60L 3/00, B60L 5/42, G01N 21/956, G01N 21/88, B60M 1/36, B60R 11/04, B61L 3/10, B61L 25/02, G01B 11/30, G01M 11/08, G01M 17/08, G01P 3/36, B61L 23/04

(54) **DISPOSITIF DE DÉTECTION DE DÉGRADATION DE SURFACE DE CONTACT D'UN SYSTÈME D'ALIMENTATION ÉLECTRIQUE D'UN VÉHICULE**
VORRICHTUNG ZUR ERKENNUNG VON SCHÄDEN AN DER KONTAKTFLÄCHE EINES ELEKTRISCHEN STROMVERSORGUNGSSYSTEMS EINES FAHRZEUGS
DEVICE FOR DETECTING THE DEGRADATION OF A CONTACT SURFACE OF A SYSTEM FOR SUPPLYING POWER TO A VEHICLE

(30) Priorité: 27.07.2020 FR 2007891
(43) Date de publication de la demande: 02.02.2022
(73) Titulaire: ALSTOM Holdings, 93400 Saint-Ouen-sur-Seine (FR)
(72) Inventeur: DUBAN, Patrick, 17000 La Rochelle (FR); RENIE, Matthieu, 17139 Dompierre sur Mer (FR); MUSSET, Sébastien, 17220 Sainte Soulle (FR)
(74) Mandataire: Lavoix

(56) Documents cités:
- EP-A1- 2 937 241
- EP-A1- 3 187 360
- EP-A1- 3 531 102
- EP-A1- 3 606 052
- WO-A1-2015/169326
- CN-A- 110 806 508
- GB-A- 2 546 344

## Description

La présente invention concerne un dispositif de détection d'au moins une dégradation d'une surface de contact d'au moins un point de recharge d'un système d'alimentation en énergie électrique d'un véhicule, notamment ferroviaire, propre à se déplacer sur une voie, notamment une voie ferroviaire, le système d'alimentation comprenant au moins un élément de stockage d'énergie porté par le véhicule, au moins un point de recharge, en dehors du véhicule, disposé à proximité de la voie, une infrastructure d'alimentation du ou de chaque point de recharge, propre à fournir au ou à chaque point de recharge un courant de charge, au moins un organe de captation porté par le véhicule et relié audit au moins un élément de stockage d'énergie, ledit au moins un organe de captation et ledit au moins un point de recharge étant propres à coopérer pour transmettre le courant de charge, lors d'une opération de charge, audit au moins un élément de stockage d'énergie, le dispositif de détection étant propre à être embarqué à bord du véhicule, et étant localisé en avant de chaque organe de captation suivant le sens de circulation du véhicule.

L'invention concerne également un véhicule, notamment ferroviaire, comprenant un tel dispositif de détection.

L'invention concerne également un système d'alimentation du type précité.

L'invention concerne également un procédé de détection d'au moins une dégradation d'une surface de contact d'au moins un point de recharge d'un système d'alimentation en énergie électrique d'un véhicule mis en oeuvre par ledit véhicule.

Les véhicules de transport en commun électriques, par exemple ferroviaires, comme les tramways en milieu urbain, sont munis d'éléments de stockage d'énergie, tels que des batteries ou des super-condensateurs fournissant au tramway l'énergie nécessaire à ses déplacements. Afin de permettre d'effectuer toute la longueur d'un trajet, les éléments de stockage d'énergie doivent être rechargés durant le voyage. Cette recharge est effectuée en transmettant un courant, d'une infrastructure d'alimentation, par un point de recharge de cette infrastructure d'alimentation, un tel point de recharge étant externe au véhicule, à un organe de captation, par exemple un patin, appartenant au tramway. Afin que la recharge soit rapide, le courant circulant dans le point de recharge, externe au véhicule, et dans l'organe de captation est très élevé, par exemple 1600 A.

Ainsi, s'il y a un mauvais contact entre l'organe de captation du véhicule et le point de recharge en dehors du véhicule, par exemple si l'un ou l'autre est détérioré, il peut y avoir création d'un arc électrique entre l'organe de captation du véhicule et le point de recharge, en dehors du véhicule. L'apparition d'un tel arc peut créer une soudure entre l'organe de captation et le point de recharge, en dehors du véhicule, Ces détériorations pouvant aller jusqu'à déclencher un incendie, il est nécessaire de les éviter. EP3187360 A1 divulgue un système ferroviaire comprenant deux véhicules distincts, un des véhicules étant hybride et comprenant un dispositif de stockage d'énergie propre à accumuler de l'énergie et à le restituer le cas échéant à l'autre véhicule et un contrôleur propre à contrôler la faisabilité de la charge/décharge dudit dispositif de stockage. EP3606052 A1 divulgue un système de caméra(s) et de capteur(s) pour la surveillance par l'image d'un train, et divulgue en particulier des caméras de surveillance de pantographe.

Les solutions actuelles ne donnent cependant pas entière satisfaction. En effet, ces solutions ne permettent pas d'agir en amont de l'instant de recharge en évitant l'utilisation d'un contact détérioré.

Un objectif de la présente invention est d'aider au choix de la meilleure interface de recharge disponible tout en améliorant la maintenance de chaque interface de recharge, notamment en termes de sécurité.

A cet effet, l'invention a pour objet un dispositif de détection d'au moins une dégradation d'une surface de contact d'au moins un point de recharge d'un système d'alimentation en énergie électrique d'un véhicule, notamment ferroviaire, propre à se déplacer sur une voie, notamment une voie ferroviaire,
le système d'alimentation comprenant au moins un élément de stockage d'énergie porté par le véhicule, au moins un point de recharge disposé à proximité de la voie, une infrastructure d'alimentation du ou de chaque point de recharge, propre à fournir au ou à chaque point de recharge un courant de charge, au moins un organe de captation porté par le véhicule et relié audit au moins un élément de stockage d'énergie, ledit au moins un organe de captation et ledit au moins un point de recharge étant propres à coopérer pour transmettre le courant de charge, lors d'une opération de charge, audit au moins un élément de stockage d'énergie,
le dispositif de détection étant propre à être embarqué à bord du véhicule, et propre à être localisé en avant de chaque organe de captation suivant le sens de circulation du véhicule, le dispositif de détection étant caractérisé en ce qu'il comprend :
   - au moins un capteur d'image(s) configuré pour capturer des images de ladite surface de contact ;
   - un module de traitement d'image(s) configuré pour détecter, par traitement des image(s) obtenues par ledit au moins un capteur, la présence ou l'absence d'au moins une dégradation de ladite surface de contact.

Le dispositif de détection selon l'invention peut comprendre l'une ou plusieurs des caractéristiques suivantes, prise(s) isolément ou suivant toute combinaison techniquement possible :
- le dispositif de détection est également configuré pour être connecté à un système de contrôle et de surveillance du véhicule, notamment ferroviaire, et dans lequel le dispositif de détection est également configuré pour transmettre audit système de contrôle et de surveillance du véhicule une information représentative de la présence d'au moins une dégradation de ladite surface de contact en cas de détection positive ;
- le dispositif comprend en outre un module d'obtention de la position géographique de ladite surface de contact dudit au moins un point de recharge du système d'alimentation et/ou de détermination des coordonnées géographiques du véhicule associées à un instant t₁ de capture d'image(s) de ladite surface de contact ;
- le dispositif comprend en outre au moins un élément de protection dudit au moins un capteur d'image(s), ledit au moins un élément de protection et ledit au moins un capteur d'images(s) étant localisés propres à être sous le châssis ou en toiture du véhicule, respectivement en vis-à-vis d'un point de recharge au sol ou aérien, et/ou comprenant au moins un élément d'éclairage complémentaire configuré pour éclairer ladite surface de contact dudit au moins un point de recharge simultanément à la capture d'image(s) mise en oeuvre par ledit au moins un capteur d'image(s).

L'invention a également pour objet un véhicule, notamment ferroviaire, comprenant au moins un dispositif de détection tel que décrit ci-dessus.

Le véhicule selon l'invention peut comprendre l'une ou plusieurs des caractéristiques suivantes, prise(s) isolément ou suivant toute combinaison techniquement possible :
- véhicule dans lequel le dispositif de détection est localisé en avant de chaque organe de captation suivant le sens de circulation du véhicule;
- le véhicule comprend en outre un système de contrôle et de surveillance du véhicule, notamment ferroviaire, le dispositif de détection étant directement connecté au système de contrôle et de surveillance du véhicule, le système de contrôle et de surveillance du véhicule étant configuré pour :
   - recevoir, du dispositif de détection, une information représentative de la présence d'au moins une dégradation de ladite surface de contact en cas de détection positive, et
   - sélectionner automatiquement un organe de captation du véhicule en vis-à-vis d'un point de recharge non dégradé pour recharger le véhicule, et/ou
   - restituer au conducteur du véhicule un indicateur obtenu par odométrie, l'indicateur étant configuré pour guider le conducteur à arrêter le véhicule avec un organe de captation du véhicule en vis-à-vis d'un point de recharge non dégradé pour recharger le véhicule, et/ou
   - activer un système de nettoyage du véhicule configuré pour nettoyer ladite surface de contact détectée comme dégradée ; et/ou
   - enregistrer ladite information représentative de la présence d'au moins une dégradation de ladite surface de contact dans un espace mémoire dédié au stockage d'évènement(s) associé(s) audit véhicule et accessible à distance; et/ou
   - émettre une requête de maintenance, ladite requête de maintenance comprenant les coordonnées géographiques du véhicule associées à un instant t₁ de capture d'image(s) de ladite surface de contact et délivrées par un dispositif de géolocalisation embarqué à bord du véhicule et également connecté au système de contrôle et de surveillance du véhicule.

L'invention a également pour objet un système d'alimentation en énergie électrique d'un véhicule, notamment ferroviaire, propre à se déplacer sur une voie, notamment une voie ferroviaire,
le système d'alimentation comprenant au moins un élément de stockage d'énergie porté par le véhicule, au moins un point de recharge disposé à proximité de la voie, une infrastructure d'alimentation du ou de chaque point de recharge, propre à fournir au ou à chaque point de recharge un courant de charge, au moins un organe de captation porté par le véhicule et relié audit au moins un élément de stockage d'énergie, ledit au moins un organe de captation et ledit au moins un point de recharge étant propres à coopérer pour transmettre le courant de charge, lors d'une opération de charge, audit au moins un élément de stockage d'énergie,
le système d'alimentation comprenant sur chaque point de recharge au moins un repère visuel délimitant une zone de détection par rapport à une surface utile de contact électrique, une image de la zone de détection étant propre à être capturée par le dispositif de détection tel que décrit ci-dessus.

Le système d'alimentation peut comprendre la caractéristique suivante, à savoir que ledit au moins un point de recharge est aérien ou au sol.

L'invention a également pour objet un procédé de détection d'au moins une dégradation d'une surface de contact d'au moins un point de recharge d'un système d'alimentation en énergie électrique d'un véhicule, notamment ferroviaire, propre à se déplacer sur une voie, notamment une voie ferroviaire,
le système d'alimentation comprenant au moins un élément de stockage d'énergie porté par le véhicule, au moins un point de recharge disposé à proximité de la voie, une infrastructure d'alimentation du ou de chaque point de recharge, propre à fournir au ou à chaque point de recharge un courant de charge, au moins un organe de captation porté par le véhicule et relié audit au moins un élément de stockage d'énergie, ledit au moins un organe de captation et ledit au moins un point de recharge étant propres à coopérer pour transmettre le courant de charge, lors d'une opération de charge, audit au moins un élément de stockage d'énergie,
le procédé étant mis en oeuvre par le véhicule tel que décrit ci-dessus et comprenant les étapes suivantes mises en oeuvre par le dispositif de détection embarqué à bord dudit véhicule, localisé en avant de chaque organe de captation suivant le sens de circulation de véhicule :
   - capture d'images de ladite surface de contact,
   - détection, par traitement des image(s) capturées, de la présence ou l'absence d'au moins une dégradation de ladite surface de contact,
   - transmission, à un système de contrôle et de surveillance du véhicule, une information représentative de la présence d'au moins une dégradation de ladite surface de contact en cas de détection positive ;
   et des étapes suivantes mises en oeuvre par le système de contrôle et de surveillance du véhicule
   - réception, dudit dispositif de détection, de ladite information représentative de la présence d'au moins une dégradation de ladite surface de contact en cas de détection positive, et
   - sélection automatique d'un organe de captation du véhicule en vis-à-vis d'un point de recharge non dégradé pour recharger le véhicule, et/ou
   - restitution au conducteur du véhicule d'un indicateur obtenu par odométrie, l'indicateur étant configuré pour guider le conducteur à arrêter le véhicule avec un organe de captation du véhicule en vis-à-vis d'un point de recharge non dégradé pour recharger le véhicule, et/ou
   - activation d'un système de nettoyage du véhicule configuré pour nettoyer ladite surface de contact détectée comme dégradée ; et/ou
   - enregistrement de ladite information représentative de la présence d'au moins une dégradation de ladite surface de contact dans un espace mémoire dédié au stockage d'évènement(s) associé(s) audit véhicule et accessible à distance; et/ou
   - émission d'une requête de maintenance, ladite requête de maintenance comprenant les coordonnées géographiques du véhicule associées à un instant de détection positive de la dégradation de ladite surface de contact et délivrées par un dispositif de géolocalisation embarqué à bord du véhicule et également connecté au système de contrôle et de surveillance du véhicule.

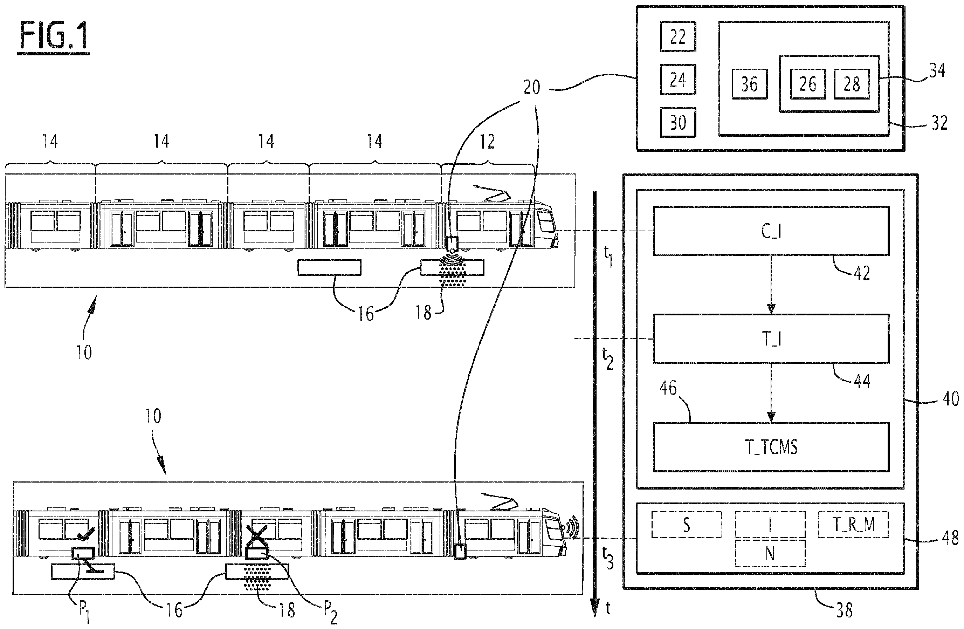

L'invention sera mieux comprise à la lecture de la description qui va suivre, donnée uniquement à titre d'exemple, et faite en se référant au dessin annexé, sur lequel [Fig 1] la Figure 1 est une vue schématique de côté d'un véhicule selon la présente invention et du procédé de détection mis en oeuvre par ledit véhicule.

Dans la suite de la description, l'expression « sensiblement égal à » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

Un véhicule 10, notamment ferroviaire est illustré sur la figure 1. Un tel véhicule 10 comprend notamment à l'extrémité avant, par rapport à son sens de déplacement, une voiture de tête 12 motrice et, à la suite, une pluralité de voitures de transport suivantes.

Par exemple, le véhicule 10 est un tramway se déplaçant sur une voie, non représentée formée de files de rails. Un tel tramway 10 est par exemple un tramway électrique "autonome", énergétiquement parlant, nécessitent des systèmes de recharge rapide mettant en jeu des courants très importants, par exemple de l'ordre de 1600A, captés par un patin spécifique P₁ ou P₂ respectivement en sous-châssis tel qu'illustré par la figure 1, ou en toiture non représenté.

Sur la figure 1, le système de recharge rapide également appelé système d'alimentation comprend au moins un élément de stockage d'énergie, non représenté, porté par le véhicule 10, au moins un point de recharge 16 (i.e. plot de recharge 16), localisé en dehors du véhicule, disposé à proximité de la voie, une infrastructure d'alimentation, non représentée, du ou de chaque point de recharge localisé en dehors du véhicule, propre à fournir au ou à l'un des points de recharge 16 un courant de charge, au moins un organe de captation, tel que les patins spécifiques P₁ ou P₂, portés par le véhicule 10 et reliés audit au moins un élément de stockage d'énergie, ledit au moins un organe de captation P₁ ou P₂ du véhicule et ledit au moins un point de recharge 16, localisé en dehors du véhicule, étant propres à coopérer pour transmettre le courant de charge, lors d'une opération de charge, audit au moins un élément de stockage d'énergie.

Par la suite, il est à noter que chaque point de recharge 16 (i.e. plot de recharge 16) du système d'alimentation est localisé en dehors du véhicule tel qu'illustré sur la figure 1.

Sur la figure 1, les points de recharges 16 sont disposés au sol en dehors du véhicule. A titre d'alternative, non représentée, les points de recharge 16 sont aériens en dehors du véhicule.

Sur la figure 1, le deuxième point de recharge 16, en dehors du véhicule, propre à être rencontré par la voiture de tête 12 du véhicule 10 selon un sens de déplacement de la gauche vers la droite est dégradé par un élément de dégradation 18 correspondant à un polluant tel qu'un gravier, du sable, un morceau de verre, un morceau de plastique, etc., ou correspondant à un défaut de surface correspondant à un défaut de matière ou à un défaut géométrique de la surface de recharge fabriquée du point de recharge 16 dégradé.

Selon la présente invention, pour détecter en amont un tel élément de dégradation 18, la voiture de tête 12 du véhicule 10 comprend un dispositif de détection 20, en particulier un dispositif de détection 20 optique comprenant au moins un capteur 22 d'image(s) configuré pour capturer des images de ladite surface de contact d'un point de recharge 16, en dehors du véhicule,.

Plus précisément, le dispositif de détection 20 optique comprend par exemple au moins une caméra possédant un capteur d'image(s) 22, pour prendre des images, ou un ensemble de caméra formant par exemple une ligne de caméras réparties sur toute la largeur de la surface de contact à contrôler.

Chaque capteur d'image(s) 22 est, par exemple, associé à un objectif, par exemple hémisphérique de type hypergone (de l'anglais *fisheye*), c'est-à-dire couvrant un champ visuel d'un grand angle de vue, de l'ordre 180° ou plus. La caméra comprend le capteur d'image(s) et l'objectif disposé devant le capteur d'image(s) de façon que le capteur d'image(s) capte les images à travers l'objectif.

Ledit au moins un capteur 22 ou l'ensemble de capteurs 22 est propre à capturer autant d'images que nécessaire pour couvrir exhaustivement (i.e. « scanner ») l'ensemble de la surface de contact à contrôler de chaque point de recharge 16, en dehors du véhicule, lors du passage de la voiture de tête 12 du véhicule 10 effectué à l'instant t₁.

Le dispositif de détection 20 comprend en outre un module d'émission réception 24 comprenant notamment un premier émetteur-récepteur tel qu'une antenne radio propre à détecter l'émission radio des points de recharge 16 afin de localiser la position des interfaces de recharge et déclencher la prise de vue.

En outre, en complément facultatif, le module d'émission réception 24 comprend également un deuxième émetteur-récepteur dédié à communiquer directement par voie filaire ou sans fil avec un système TCMS, non représenté, de contrôle et de surveillance duvéhicule 10, notamment ferroviaire, le deuxième émetteur-récepteur étant également configuré pour transmettre audit système de contrôle et de surveillance du véhicule une information représentative de la présence d'au moins une dégradation 18 de ladite surface de contact en cas de détection positive, de manière à interagir en continu avec le fonctionnel du véhicule 10 directement en cours d'exploitation.

Selon un aspect particulier le premier émetteur-récepteur et le deuxième émetteur-récepteur du module d'émission 24 correspondent au même émetteur-récepteur.

Le dispositif de détection 20 comprend en outre un module de traitement d'image(s) 26 configuré pour détecter, par traitement des image(s) obtenues par ledit au moins un capteur 22, la présence ou l'absence d'au moins une dégradation de ladite surface de contact.

Plus précisément, un tel module de traitement d'image(s) 26 est propre à comparer une image de la surface de contact à contrôler avec une image de référence de ladite surface de contact présentant un état de surface optimal pour, le cas échéant détecter, par extraction (i.e. filtrage), une différence, et la qualifier (i.e. classifier), en fonction de caractéristiques visuelles prédéfinies (dimensions, couleur, aspect...) en tant qu'anomalie correspondant à une dégradation 18 correspondant à un polluant tel qu'un gravier, du sable, un morceau de verre, un morceau de plastique, etc., ou correspondant à un défaut de surface correspondant à un défaut de matière ou à un défaut géométrique de la surface de recharge du point de recharge 16 dégradé, localisé en dehors du véhicule.

En complément facultatif, le dispositif de détection 20 comprend en outre un module 28 d'obtention de la position géographique de ladite surface de contact dudit au moins un point de recharge 16 du système d'alimentation et/ou de détermination des coordonnées géographiques du véhicule associées à l'instant t₁ de capture d'image(s) de ladite surface de contact. Un tel module d'obtention 28 de la position géographique de ladite surface de contact dudit au moins un point de recharge 16 du système d'alimentation et/ou de détermination des coordonnées géographiques du véhicule, est par exemple propre à obtenir ladite position géographique et/ou lesdites coordonnées géographiques à partir d'informations fournies par un dispositif de géolocalisation embarqué à bord du véhicule et externe au dispositif de détection, ou comprend directement lui-même un outil de géolocalisation.

En complément facultatif, le dispositif de détection 20 comprend en outre au moins un élément 30 de protection du capteur d'image(s) 22, ledit au moins un élément de protection 30 et ledit au moins un capteur d'images(s) 22 étant propres à être localisés sous le châssis ou en toiture du véhicule, respectivement en vis-à-vis d'un point de recharge au sol ou aérien, et/ou comprenant au moins un élément d'éclairage complémentaire, non représenté, configuré pour éclairer ladite surface de contact dudit au moins un point de recharge simultanément à la capture d'image(s) mise en oeuvre par le capteur d'image(s).

En effet, ladite au moins une caméra comprenant le capteur d'image(s) 22 est propre à être montée à l'air libre sur le véhicule 10 en sous-châssis, tel qu'illustré par la figure 1, ou en toiture, non représenté, il existe donc un risque de choc ou de pollution de la caméra elle-même. Ledit au moins un élément 30 de protection correspond par exemple à une ou plusieurs protection(s) mécanique(s) configurée(s) pour protéger au maximum l'objectif associé audit au moins un capteur d'image(s) 22 de la pollution. De même, l'élément d'éclairage complémentaire, correspond par exemple à un projecteur, propre à être installé pour améliorer la précision de détection en zone sous-châssis car particulièrement sombre, ou en cas de détection nocturne.

Dans l'exemple de la figure 1, le module de traitement d'image(s) 26, et en complément facultatif le module d'obtention 28 de la position géographique de ladite surface de contact dudit au moins un point de recharge 16 du système d'alimentation et/ou de détermination des coordonnées géographiques du véhicule, sont réalisés sous forme d'un logiciel, ou d'une brique logicielle exécutable au sein d'une unité de traitement 32 du dispositif de détection 20 embarqué à bord du véhicule 10. L'unité de traitement 32 comprend par ailleurs une mémoire 34 apte à stocker de tels logiciels de traitement d'image(s), d'obtention de la position géographique de ladite surface de contact dudit au moins un point de recharge 16 du système d'alimentation et/ou de détermination des coordonnées géographiques du véhicule et un processeur 36 propre à exécuter ces logiciels pour permettre en amont de la phase de recharge une détection d'au moins une dégradation d'une surface de contact d'au moins un point de recharge.

En variante, le module de traitement d'image(s) 26, et en complément facultatif le module d'obtention 28 de la position géographique de ladite surface de contact dudit au moins un point de recharge 16 du système d'alimentation et/ou de détermination des coordonnées géographiques du véhicule sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie integrated Circuit*).

Lorsqu'au moins une partie du dispositif électronique de détection 20 embarqué à bord du véhicule 10, notamment ferroviaire, est réalisé sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

En complément, le système d'alimentation comprend sur chaque point de recharge 16 au moins un repère visuel, non représenté, délimitant une zone de détection par rapport à une surface utile de contact électrique, une image de la zone de détection étant propre à être capturée par le dispositif de détection 20. Par « surface utile », on entend la surface qui est effectivement utilisable pour le contact électrique.

Autrement dit, des repères visuels ont été préalablement positionnés sur les interfaces de recharge de manière à bien délimiter la zone de détection par rapport à la surface utile de contact électrique.

Comme indiqué précédemment, le véhicule 10, notamment ferroviaire, est propre à comprendre un système TCMS, non représenté, de contrôle et de surveillance du véhicule 10, notamment ferroviaire, le dispositif de détection 20 étant alors directement connecté au système TCMS de contrôle et de surveillance du véhicule. Selon la présente invention, le système TCMS de contrôle et de surveillance du véhicule est alors spécifiquement configuré pour :
- recevoir, du dispositif de détection 20, une information représentative de la présence d'au moins une dégradation de ladite surface de contact en cas de détection positive,
- sélectionner automatiquement un organe de captation du véhicule 10 en vis-à-vis d'un point de recharge non dégradé, en dehors du véhicule, pour recharger le véhicule, et/ou
- restituer au conducteur du véhicule 10 un indicateur obtenu par odométrie, l'indicateur étant configuré pour guider le conducteur à arrêter le véhicule 10 avec un organe de captation du véhicule en vis-à-vis d'un point de recharge non dégradé localisé en dehors du véhicule, pour recharger le véhicule, et/ou
- activer un système de nettoyage, non représenté, du véhicule 10 configuré pour nettoyer ladite surface de contact détectée comme dégradée ; et/ou
- enregistrer ladite information représentative de la présence d'au moins une dégradation de ladite surface de contact dans un espace mémoire dédié au stockage d'évènement(s) associé(s) audit véhicule 10 et accessible à distance; et/ou
- émettre une requête de maintenance, ladite requête de maintenance comprenant les coordonnées géographiques du véhicule associées à l'instant t₁ de capture d'image(s) de ladite surface de contact et délivrées par un dispositif de géolocalisation embarqué à bord du véhicule 10 et également connecté au système TCMS de contrôle et de surveillance du véhicule.

Un exemple non limitatif de fonctionnement du véhicule 10 va désormais être expliqué à l'aide de l'organigramme illustré par la figure 1 d'un procédé 38, selon l'invention, de détection d'au moins une dégradation 18 d'une surface de contact d'au moins un point de recharge 16, en dehors du véhicule, d'un système d'alimentation en énergie électrique du véhicule 10, notamment ferroviaire, propre à se déplacer sur une voie, notamment une voie ferroviaire.

Le procédé est mis en oeuvre par le véhicule 10 et comprend une première phase 40 mise en oeuvre par le dispositif de détection 20 embarqué à bord dudit véhicule.

Cette première phase 40 comprend une première étape 42, mise en oeuvre à un instant t₁ de passage de la voiture de tête 12 du véhicule 10 au-dessus du deuxième point de recharge 16, en dehors du véhicule, propre à être rencontré par la voiture de tête 12 du véhicule 10 selon un sens de déplacement de la gauche vers la droite, et portant en surface une dégradation 18, la première étape 42 correspondant à une capture d'images de ladite surface de contact du plot 16, capture C_I mise en oeuvre par ledit au moins un capteur d'image(s) 22.

Au cours d'une deuxième étape 44, le dispositif de détection 20 via son module de traitement d'image(s) détecte à un instant t₂, par traitement T_I des image(s) capturées, la présence de la dégradation 18 de ladite surface de contact.

Au cours d'une troisième étape 46, le dispositif de détection 20, via son module d'émission-réception 24, transmet, à un système TCMS de contrôle et de surveillance du véhicule 10, une information représentative de la présence de la dégradation 18 de ladite surface de contact.

Successivement, le procédé 38, selon l'invention comprend une deuxième phase 48 mise en oeuvre par le système TCMS de contrôle et de surveillance du véhicule 10.

Au cours d'une première étape, non représentée de cette deuxième phase 48, le système TCMS de contrôle et de surveillance du véhicule 10, reçoit, dudit dispositif de détection 20, l'information représentative de la présence de la dégradation 18 de ladite surface de contact.

En présence d'une telle information représentative de la présence de la dégradation 18 de ladite surface de contact, le système TCMS définit, à l'instant t₃, un choix en fonction des conditions opérationnelles du véhicule 10.

Selon une première alternative, le système TCMS met en oeuvre une étape S de sélection automatique d'un organe de captation P₁ du véhicule 10, tel qu'un patin ou un pantographe spécifique positionné dans une voiture 14 médiane au sein du véhicule 10 par rapport à la voiture de tête 12, en vis-à-vis du premier point de recharge 16 non dégradé, localisé en dehors du véhicule, pour recharger le véhicule 10, et en conséquence d'inhibition automatique d'un organe de captation P₂ du véhicule en vis-à-vis du deuxième point de recharge 16 dégradé propre à être rencontré par la voiture de tête 12 du véhicule 10 selon un sens de déplacement de la gauche vers la droite. Autrement dit, au cours de cette étape S, le système TCMS choisit automatiquement de déployer l'organe de captation le mieux adapté, c'est-à-dire en vis-à-vis de l'interface de recharge non dégradée.

Selon une deuxième alternative, le système TCMS restitue au conducteur du véhicule 10 un indicateur I obtenu par odométrie, l'indicateur I étant configuré pour guider le conducteur à arrêter le véhicule avec un organe de captation du véhicule en vis-à-vis d'un point de recharge non dégradé, localisé en dehors du véhicule, pour recharger le véhicule. Une telle restitution d'indicateur I correspond par exemple à l'affichage d'un pictogramme sur l'écran de conduite du conducteur pour le faire s'arrêter en début ou en fin de zone de recharge.

Selon une troisième alternative, le système TCMS met en oeuvre l'activation N d'un système de nettoyage, non représenté, du véhicule 10 configuré pour nettoyer ladite surface de contact détectée comme dégradée, le système de nettoyage correspondant par exemple à une brosse ou un système d'envoi d'air comprimé pour évacuer le polluant 18 de la zone de recharge.

En parallèle, selon un aspect facultatif non représenté, le système TCMS met en oeuvre l'enregistrement de ladite information représentative de la présence de la dégradation 18 de ladite surface de contact dans un espace mémoire dédié au stockage d'évènement(s) associé(s) audit véhicule et accessible à distance.

Autrement dit, la présence de polluants/défauts est en parallèle enregistrée dans une pile des évènements véhicule (e.g. train, tramway) qui est accessible à distance via un outil ferroviaire tel que TrainTracer CFM^{®} ou Health-hub^{®} où une alerte de maintenance est déclenchée avec les coordonnées GPS du train au moment de l'évènement ainsi que d'autres informations de contexte.

Selon une autre alternative, le système TCMS met directement en oeuvre l'émission T_R_M d'une requête de maintenance, ladite requête de maintenance comprenant les coordonnées géographiques du véhicule associées à l'instant t₁ de capture d'image(s) de ladite surface de contact et délivrées par un dispositif de géolocalisation embarqué à bord du véhicule 10 et également connecté au système TCMS de contrôle et de surveillance du véhicule 10.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi d'anticiper une éventuelle dégradation de la qualité de contact en détectant la présence de polluants ou de défauts de surface avant de déclencher le processus de recharge, et applicable à tous les véhicules électriques rechargeables mais aussi à tous les systèmes électriques rechargeable par un chargeur mobile.

De plus, la présente invention agit en amont en proposant une première barrière pour aider au choix de la meilleure interface de recharge disponible et pour signaler les défauts à la maintenance. Cette invention permet également un gain de temps en exploitation car elle permet d'éviter de manoeuvrer un organe de captation en vis-à-vis d'un point de recharge (i.e. plot de recharge) pollué.

Par ailleurs, l'invention permet de limiter les dégradations telles que soudure, marquage, arrachement, usure prématurée, etc. des organes de captations correspondant à un patin, ou à un pantographe spécifique, etc. et des organes de distribution correspondant par exemple à un point ou un plot de recharge, à une caténaire rigide dues à un mauvais contact électrique du fait d'une dégradation 18 de la surface de contact de ces organes de distribution.

## Revendications

1. Dispositif de détection (20) d'au moins une dégradation (18) d'une surface de contact d'au moins un point de recharge (16) d'un système d'alimentation en énergie électrique d'un véhicule (10), notamment ferroviaire, propre à se déplacer sur une voie, notamment une voie ferroviaire,
le système d'alimentation comprenant au moins un élément de stockage d'énergie porté par le véhicule (10), au moins un point de recharge (16) disposé à proximité de la voie, une infrastructure d'alimentation du ou de chaque point de recharge, propre à fournir au ou à chaque point de recharge un courant de charge, au moins un organe de captation (P₁, P₂) porté par le véhicule (10) et relié audit au moins un élément de stockage d'énergie, ledit au moins un organe de captation (P₁, P₂) et ledit au moins un point de recharge (16) étant propres à coopérer pour transmettre le courant de charge, lors d'une opération de charge, audit au moins un élément de stockage d'énergie,
le dispositif de détection (20) étant propre à être embarqué à bord du véhicule (10), et **caractérisé en ce qu'**il est localisé en avant de chaque organe de captation suivant le sens de circulation du véhicule,
et **en ce qu'**il comprend :
- au moins un capteur d'image(s) (22) configuré pour capturer des images de ladite surface de contact ;
- un module (26) de traitement d'image(s) configuré pour détecter, par traitement des image(s) obtenues par ledit au moins un capteur (22), la présence ou l'absence d'au moins une dégradation (18) de ladite surface de contact.

2. Dispositif de détection (20) selon la revendication 1, dans lequel le dispositif de détection (20) est également configuré pour être connecté à un système de contrôle et de surveillance du véhicule, notamment ferroviaire, et dans lequel le dispositif de détection est également configuré pour transmettre audit système de contrôle et de surveillance du véhicule une information représentative de la présence d'au moins une dégradation (18) de ladite surface de contact en cas de détection positive.

3. Dispositif de détection (20) selon la revendication 1 ou 2, comprenant en outre un module d'obtention (28) de la position géographique de ladite surface de contact dudit au moins un point de recharge (16) du système d'alimentation et/ou de détermination des coordonnées géographiques du véhicule associées à un instant t₁ de capture d'image(s) de ladite surface de contact.

4. Dispositif de détection (20) selon l'une quelconque des revendications précédentes, comprenant en outre au moins un élément de protection dudit au moins un capteur d'image(s) (22), ledit au moins un élément de protection et ledit au moins un capteur d'images(s) (22) étant propres à être localisés sous le châssis ou en toiture du véhicule (10), respectivement en vis-à-vis d'un point de recharge (16) au sol ou aérien, et/ou comprenant au moins un élément d'éclairage complémentaire configuré pour éclairer ladite surface de contact dudit au moins un point de recharge (16) simultanément à la capture d'image(s) mise en oeuvre par ledit au moins un capteur d'image(s) (22).

5. Véhicule (10), notamment ferroviaire, propre à se déplacer sur une voie, notamment une voie ferroviaire, le véhicule (10) étant propre à être rechargé par un système d'alimentation en énergie électrique,
le système d'alimentation comprenant au moins un élément de stockage d'énergie porté par le véhicule, au moins un point de recharge (16) disposé à proximité de la voie, une infrastructure d'alimentation du ou de chaque point de recharge (16), propre à fournir au ou à chaque point de recharge un courant de charge, au moins un organe de captation (P₁, P₂) porté par le véhicule et relié audit au moins un élément de stockage d'énergie, ledit au moins un organe de captation (P₁, P₂) et ledit au moins un point de recharge étant propres à coopérer pour transmettre le courant de charge, lors d'une opération de charge, audit au moins un élément de stockage d'énergie,
le véhicule (20) étant **caractérisé en ce qu'**il comprend un dispositif de détection (20) selon l'une quelconque des revendications précédentes.

6. Véhicule (10) selon la revendication 5, comprenant en outre un système de contrôle et de surveillance du véhicule, notamment ferroviaire, le dispositif de détection (20) étant directement connecté au système de contrôle et de surveillance du véhicule, le système de contrôle et de surveillance du véhicule étant configuré pour :
- recevoir, du dispositif de détection (20), une information représentative de la présence d'au moins une dégradation de ladite surface de contact en cas de détection positive, et
- sélectionner automatiquement un organe de captation (P₁, P₂) du véhicule en vis-à-vis d'un point de recharge (16) non dégradé pour recharger le véhicule (10), et/ou
- restituer au conducteur du véhicule un indicateur obtenu par odométrie, l'indicateur étant configuré pour guider le conducteur à arrêter le véhicule avec un organe de captation du véhicule en vis-à-vis d'un point de recharge non dégradé pour recharger le véhicule, et/ou
- activer un système de nettoyage du véhicule configuré pour nettoyer ladite surface de contact détectée comme dégradée ; et/ou
- enregistrer ladite information représentative de la présence d'au moins une dégradation de ladite surface de contact dans un espace mémoire dédié au stockage d'évènement(s) associé(s) audit véhicule et accessible à distance; et/ou
- émettre une requête de maintenance, ladite requête de maintenance comprenant les coordonnées géographiques du véhicule associées à un instant t₁ de capture d'image(s) de ladite surface de contact et délivrées par un dispositif de géolocalisation embarqué à bord du véhicule et également connecté au système de contrôle et de surveillance du véhicule.

7. Système d'alimentation en énergie électrique d'un véhicule (10), notamment ferroviaire, propre à se déplacer sur une voie, notamment une voie ferroviaire,
le système d'alimentation comprenant au moins un élément de stockage d'énergie porté par le véhicule (10), au moins un point de recharge (16) disposé à proximité de la voie, une infrastructure d'alimentation du ou de chaque point de recharge (16), propre à fournir au ou chaque point de recharge un courant de charge, au moins un organe de captation porté par le véhicule et relié audit au moins un élément de stockage d'énergie, ledit au moins un organe de captation et ledit au moins un point de recharge étant propres à coopérer pour transmettre le courant de charge, lors d'une opération de charge, audit au moins un élément de stockage d'énergie,
le système d'alimentation étant **caractérisé en ce qu'**il comprend sur chaque point de recharge au moins un repère visuel délimitant une zone de détection par rapport à une surface utile de contact électrique correspondant à la surface qui est effectivement utilisable pour le contact électrique, une image de la zone de détection étant propre à être capturée par le dispositif de détection (20) selon l'une quelconque des revendications 1 à 4.

8. Système d'alimentation selon la revendication 7, dans lequel ledit au moins un point de recharge (16) est aérien ou au sol.

9. Procédé (38) de détection d'au moins une dégradation (18) d'une surface de contact d'au moins un point de recharge (16) d'un système d'alimentation en énergie électrique d'un véhicule (10), notamment ferroviaire, propre à se déplacer sur une voie, notamment une voie ferroviaire,
le système d'alimentation comprenant au moins un élément de stockage d'énergie porté par le véhicule (10), au moins un point de recharge (16) disposé à proximité de la voie, une infrastructure d'alimentation du ou de chaque point de recharge, propre à fournir au ou à chaque point de recharge (16) un courant de charge, au moins un organe de captation (P₁, P₂) porté par le véhicule et relié audit au moins un élément de stockage d'énergie, ledit au moins un organe de captation et ledit au moins un point de recharge (16) étant propres à coopérer pour transmettre le courant de charge, lors d'une opération de charge, audit au moins un élément de stockage d'énergie,
le procédé (38) étant **caractérisé en ce qu'**il est mis en oeuvre par le véhicule selon la revendication 5 et **en ce qu'**il comprend les étapes suivantes mises en oeuvre par le dispositif de détection embarqué à bord dudit véhicule localisé en avant de chaque organe de captation suivant le sens de circulation du véhicule :
- capture d'images (42) de ladite surface de contact,
- détection, par traitement (44) des image(s) capturées, de la présence ou l'absence d'au moins une dégradation de ladite surface de contact,
- transmission (46), à un système de contrôle et de surveillance du véhicule, une information représentative de la présence d'au moins une dégradation de ladite surface de contact en cas de détection positive ;
et des étapes suivantes mises en oeuvre par le système de contrôle et de surveillance du véhicule
- réception, dudit dispositif de détection, de ladite information représentative de la présence d'au moins une dégradation de ladite surface de contact en cas de détection positive, et
- sélection (S) automatique d'un organe de captation du véhicule en vis-à-vis d'un point de recharge non dégradé pour recharger le véhicule, et/ou
- restitution (I) au conducteur du véhicule d'un indicateur obtenu par odométrie, l'indicateur étant configuré pour guider le conducteur à arrêter le véhicule avec un organe de captation du véhicule en vis-à-vis d'un point de recharge non dégradé pour recharger le véhicule, et/ou
- activation (N) d'un système de nettoyage du véhicule configuré pour nettoyer ladite surface de contact détectée comme dégradée ; et/ou
- enregistrement de ladite information représentative de la présence d'au moins une dégradation de ladite surface de contact dans un espace mémoire dédié au stockage d'évènement(s) associé(s) audit véhicule et accessible à distance; et/ou
- émission (T_R_M) d'une requête de maintenance, ladite requête de maintenance comprenant les coordonnées géographiques du véhicule associées à un instant de détection positive de la dégradation de ladite surface de contact et délivrées par un dispositif de géolocalisation embarqué à bord du véhicule et également connecté au système de contrôle et de surveillance du véhicule.

## Patentansprüche

1. Vorrichtung (20) zur Erkennung mindestens einer Beschädigung (18) einer Kontaktfläche mindestens eines Ladepunkts (16) eines Systems zur Versorgung eines Fahrzeugs (10), insbesondere eines Schienenfahrzeugs, mit elektrischer Energie, das sich auf einer Fahrbahn, insbesondere einem Eisenbahngleis, fortbewegen kann, das Stromversorgungssystem umfassend mindestens ein vom Fahrzeug (10) getragenes Energiespeicherelement, mindestens einen in der Nähe der Fahrbahn angeordneten Ladepunkt (16), eine Infrastruktur zur Versorgung des oder jedes Ladepunkts, die geeignet ist, den oder jeden Ladepunkt mit einem Ladestrom zu versorgen, mindestens ein Aufnahmeorgan (P₁, P₂), das von dem Fahrzeug (10) getragen wird und mit dem mindestens einen Energiespeicherelement verbunden ist, wobei das mindestens eine Aufnahmeorgan (P₁, P₂) und der mindestens eine Ladepunkt (16) so beschaffen sind, dass sie zusammenwirken, um den Ladestrom während eines Ladevorgangs an das mindestens eine Energiespeicherelement zu übertragen,
wobei die Erkennungsvorrichtung (20) geeignet ist, an Bord des Fahrzeugs (10) mitgenommen zu werden, und **dadurch gekennzeichnet ist, dass** sie in Fahrtrichtung des Fahrzeugs vor jedem Aufnahmeorgan lokalisiert ist,
und dadurch, dass sie Folgendes umfasst:
- mindestens einen Bildsensor (22), der so konfiguriert ist, dass er Bilder der Kontaktfläche erfasst;
- ein Modul (26) zur Verarbeitung von Bild(ern), das so konfiguriert ist, dass es durch Verarbeitung der von dem mindestens einen Sensor (22) erhaltenen Bild(er) das Vorhandensein oder die Abwesenheit von mindestens einer Beschädigung (18) der Kontaktfläche erkennt.

2. Erkennungsvorrichtung (20) nach Anspruch 1, wobei die Erkennungsvorrichtung (20) auch so konfiguriert ist, dass sie mit einem Fahrzeugkontroll- und -überwachungssystem, insbesondere des Schienenfahrzeugs, verbunden werden kann, und wobei die Erkennungsvorrichtung auch so konfiguriert ist, dass sie im Falle einer positiven Erkennung eine Information, die für das Vorhandensein mindestens einer Beschädigung (18) der Kontaktfläche repräsentativ ist, an das Fahrzeugkontroll- und - überwachungssystem überträgt.

3. Erkennungsvorrichtung (20) nach Anspruch 1 oder 2, die außerdem ein Modul zum Erhalten (28) der geografischen Position der Kontaktfläche des mindestens einen Ladepunkts (16) des Energieversorgungssystems und/oder zur Bestimmung der geografischen Koordinaten des Fahrzeugs umfasst, die mit einem Zeitpunkt t₁ der Erfassung eines Bildes oder mehrerer Bilder der Kontaktfläche verbunden sind.

4. Erkennungsvorrichtung (20) nach einem der vorhergehenden Ansprüche, die außerdem mindestens ein Schutzelement für den mindestens einen Bildsensor (22) umfasst, wobei das mindestens eine Schutzelement und der mindestens eine Bildsensor (22) dazu geeignet sind, unter dem Fahrgestell oder auf dem Dach des Fahrzeugs (10) angeordnet zu werden, gegenüber einem Ladepunkt (16) am Boden oder in der Luft, und/oder mindestens ein zusätzliches Beleuchtungselement zu umfassen, das so konfiguriert ist, um die Kontaktfläche des mindestens einen Ladepunkts (16) gleichzeitig mit der Bilderfassung, die von dem mindestens einen Bildsensor (22) durchgeführt wird, zu beleuchten.

5. Fahrzeug (10), insbesondere Schienenfahrzeug, das geeignet ist, sich auf einer Fahrbahn, insbesondere einem Eisenbahngleis, zu bewegen, wobei das Fahrzeug (10) geeignet ist, durch ein elektrisches Energieversorgungssystem aufgeladen zu werden,
das Versorgungssystem umfasst mindestens ein vom Fahrzeug getragenes Energiespeicherelement, mindestens einen Ladepunkt (16), der in der Nähe der Fahrbahn angeordnet ist, eine Infrastruktur zur Versorgung des oder jedes Ladepunkts (16), die geeignet ist, dem oder jedem Ladepunkt einen Ladestrom zuzuführen, mindestens ein Aufnahmeorgan (P₁, P₂), das von dem Fahrzeug getragen wird, und mit dem mindestens einen Energiespeicherelement verbunden ist, wobei das mindestens eine Aufnahmeorgan (P₁, P₂),und der mindestens eine Ladepunkt geeignet sind zusammenzuwirken, um den Ladestrom während eines Ladevorgangs an das mindestens eine Energiespeicherelement zu übertragen,
Fahrzeug (20), das **dadurch gekennzeichnet ist, dass** es eine Erkennungsvorrichtung (20) nach einem der vorstehenden Ansprüche umfasst.

6. Fahrzeug (10) nach Anspruch 5, ferner umfassend ein Fahrzeugkontroll- und -überwachungssystem, insbesondere ein Eisenbahnsystem, wobei die Erkennungsvorrichtung (20) direkt mit dem Fahrzeugkontroll- und - überwachungssystem verbunden ist, wobei das Fahrzeugkontroll- und - überwachungssystem konfiguriert ist, um:
- von der Erkennungsvorrichtung (20) eine Information zu empfangen, die repräsentativ für das Vorhandensein von mindestens einer Beschädigung der Kontaktfläche im Falle einer positiven Erkennung ist, und
- automatisch ein Aufnahmeorgan (P₁, P₂) des Fahrzeugs gegenüber einem nicht beschädigten Ladepunkt (16) auszuwählen, um das Fahrzeug (10) aufzuladen, und/oder
- dem Fahrer des Fahrzeugs einen durch Odometrie erhaltenen Indikator wiederzugeben, wobei der Indikator so konfiguriert ist, dass er den Fahrer dazu anleitet, das Fahrzeug mit einem Aufnahmeorgan des Fahrzeugs gegenüber einem nicht beschädigten Ladepunkt anzuhalten, um das Fahrzeug wieder aufzuladen, und/oder
- ein Reinigungssystem des Fahrzeugs zu aktivieren, das so konfiguriert ist, dass es die als beeinträchtigt erkannte Kontaktfläche reinigt; und/oder
- die Information, die für das Vorhandensein mindestens einer Beschädigung der Kontaktfläche repräsentativ ist, an einem Speicherplatz zu speichern, der der Speicherung von Ereignis(sen), die mit dem Fahrzeug verbunden sind, gewidmet und aus der Ferne zugänglich ist; und/oder
- eine Wartungsanforderung auszugeben, wobei die Wartungsanforderung die geografischen Koordinaten des Fahrzeugs umfasst, die mit einem Zeitpunkt t₁ der Erfassung eines Bildes oder von Bildern der Kontaktfläche verbunden sind, die von einer an Bord des Fahrzeugs befindlichen und ebenfalls an das Fahrzeugkontroll- und - überwachungssystem angeschlossenen Geolokalisierungsvorrichtung geliefert werden.

7. System zur Versorgung eines Fahrzeugs (10), insbesondere eines Schienenfahrzeugs, mit elektrischer Energie, das geeignet ist, sich auf einer Fahrbahn, insbesondere einem Eisenbahngleis, zu bewegen,
Wobei das Stromversorgungssystem mindestens ein vom Fahrzeug (10) getragenes Energiespeicherelement, mindestens einen Ladepunkt (16), der in der Nähe der Fahrbahn angeordnet ist, und mindestens eine Infrastruktur zur Versorgung des oder jedes Ladepunkts (16) umfasst, die geeignet ist, den oder jeden Ladepunkt mit einem Ladestrom zu versorgen, mindestens ein Aufnahmeorgan, das von dem Fahrzeug getragen wird, und mit dem mindestens einen Energiespeicherelement verbunden ist, wobei das mindestens eine Aufnahmeorgan und der mindestens eine Ladepunkt zusammenwirken können, um den Ladestrom während eines Ladevorgangs an das mindestens eine Energiespeicherelement zu übertragen,
wobei das Versorgungssystem **dadurch gekennzeichnet ist, dass** es an jedem Ladepunkt mindestens eine visuelle Markierung umfasst, die eine Erkennungszone in Bezug auf eine Nutzfläche für den elektrischen Kontakt abgrenzt, die der Fläche entspricht, die tatsächlich für den elektrischen Kontakt nutzbar ist, wobei ein Bild der Erkennungszone geeignet ist, von der Erkennungsvorrichtung (20) nach einem der Ansprüche 1 bis 4 erfasst zu werden.

8. Stromversorgungssystem nach Anspruch 7, wobei der mindestens eine Ladepunkt (16) oberirdisch oder am Boden ist.

9. Verfahren (38) zum Erkennen mindestens einer Beschädigung (18) einer Kontaktfläche mindestens eines Ladepunkts (16) eines Systems zur Versorgung eines Fahrzeugs (10), insbesondere eines Schienenfahrzeugs, mit elektrischer Energie, das sich auf einer Fahrbahn, insbesondere einem Eisenbahngleis, fortbewegen kann, das Versorgungssystem mindestens ein vom Fahrzeug (10) getragenes Energiespeicherelement, mindestens einen Ladepunkt (16), der in der Nähe der Fahrbahn angeordnet ist, eine Infrastruktur zur Versorgung des oder jedes Ladepunkts, die geeignet ist, den oder jeden Ladepunkt (16) mit einem Ladestrom zu versorgen, mindestens ein Aufnahmeorgan (P₁, P₂), das von dem Fahrzeug getragen wird, und mit dem mindestens einen Energiespeicherelement verbunden ist umfasst, wobei das mindestens eine Aufnahmeorgan und der mindestens eine Ladepunkt (16) geeignet sind, zusammenzuwirken, um den Ladestrom während eines Ladevorgangs an das mindestens eine Energiespeicherelement zu übertragen,
wobei das Verfahren (38) **dadurch gekennzeichnet ist, dass** es von dem Fahrzeug nach Anspruch 5 durchgeführt wird und dass es die folgenden Schritte umfasst, die von der an Bord des Fahrzeugs befindlichen Erkennungsvorrichtung ausgeführt werden, die sich in Fahrtrichtung des Fahrzeugs vor jedem Aufnahmeorgan befindet:
- Erfassen von Bildern (42) der genannten Kontaktfläche,
- Erkennung, durch Verarbeitung (44) der erfassten Bild(er), des Vorhandenseins oder der Abwesenheit mindestens einer Beschädigung der genannten Kontaktfläche,
- Übertragen (46) einer Information, die für das Vorhandensein mindestens einer Beschädigung der Kontaktfläche repräsentativ ist, an ein Fahrzeugkontroll- und - überwachungssystem im Falle einer positiven Erkennung;
und die folgenden Schritte, die von dem Fahrzeugkontroll- und -überwachungssystem durchgeführt werden - Empfangen der Information, die für das Vorhandensein mindestens einer Beschädigung der Kontaktfläche repräsentativ ist, von der Erkennungsvorrichtung im Fall einer positiven Erkennung, und
- automatische Auswahl (S) eines Aufnahmeorgans des Fahrzeugs gegenüber einem nicht beschädigten Ladepunkt, um das Fahrzeug aufzuladen, und/oder
- Rückgabe (I) eines durch Odometrie erhaltenen Indikators an den Fahrer des Fahrzeugs, wobei der Indikator so konfiguriert ist, dass er den Fahrer dazu anleitet, das Fahrzeug mit einem Aufnahmeorgan des Fahrzeugs gegenüber einem nicht beschädigten Ladepunkt anzuhalten, um das Fahrzeug aufzuladen, und/oder
- Aktivierung (N) eines Reinigungssystems des Fahrzeugs, das so konfiguriert ist, dass es die als beschädigt erkannte Kontaktfläche reinigt; und/oder
- Speichern der Information, die für das Vorhandensein mindestens einer Beschädigung der Kontaktfläche repräsentativ ist, an einem Speicherplatz, der der Speicherung von Ereignis(en), die mit dem Fahrzeug verbunden sind, gewidmet und aus der Ferne zugänglich ist; und/oder
- Ausgeben (T_R M) einer Wartungsanforderung, wobei die Wartungsanforderung die geografischen Koordinaten des Fahrzeugs umfasst, die einem Zeitpunkt der positiven Erkennung der Beschädigung der besagten Kontaktfläche zugeordnet sind und von einer an Bord des Fahrzeugs befindlichen und ebenfalls an das Fahrzeugkontroll- und - überwachungssystem angeschlossenen Geolokalisierungsvorrichtung geliefert werden.

## Claims

1. A device (20) for detecting at least one degradation (18) of a contact surface of at least one recharging point (16) of a system for supplying electrical power to a vehicle (10), in particular a rail vehicle, capable of travelling on a track, in particular a railway track,
the power supply system comprising at least one energy storage element carried by the vehicle (10), at least one recharging point (16) arranged close to the track, a power supply infrastructure for the or each recharging point, capable of supplying the or each recharging point with a charging current, at least one collection member (P₁, P₂) carried by the vehicle by the vehicle (10) and connected to said at least one energy storage element, said at least one collection member (P₁, P₂) and said at least one recharging point (16) being suitable for cooperating to transmit the charge current, during a charging operation, to said at least one energy storage element,
the detection device (20) being suitable for being carried on board the vehicle (10), and **characterised in that** it is located in front of each collection member in the direction of travel of the vehicle,
**characterized in that** it comprises:
- at least one image sensor (22) configured to capture images of said contact surface;
- an image processing module (26) configured to detect, by processing the image(s) obtained by said at least one sensor (22), the presence or absence of at least one degradation (18) of said contact surface.

2. The detection device (20) according to claim 1, wherein the detection device (20) is also configured to be connected to a vehicle control and monitoring system, in particular a rail vehicle control and monitoring system, and wherein the detection device is also configured to transmit to said vehicle control and monitoring system an item of information representative of the presence of at least one degradation (18) of said contact surface in the event of positive detection.

3. The detection device (20) according to claim 1 or 2, further comprising a module (28) for obtaining the geographical position of the said contact surface of said at least one recharging point (16) of the power supply system and/or for determining the geographical coordinates of the vehicle associated with an instant t₁ when the image(s) of the said contact surface were captured.

4. The detection device (20) according to any one of the preceding claims, further comprising at least one element for protecting said at least one image sensor(s) (22), said at least one protection element and said at least one image sensor(s) (22) being suitable for being located under the chassis or on the roof of the vehicle (10), respectively opposite a recharging point (16) on the ground or overhead, and/or comprising at least one additional lighting element configured to illuminate said contact surface of said at least one recharging point (16) simultaneously with the capturing of image(s) by said at least one image sensor (22).

5. A vehicle (10), in particular a railway vehicle, suitable for travelling on a track, in particular a railway track, the vehicle (10) being suitable for being recharged by an electrical power supply system,
the power supply system comprising at least one energy storage element carried by the vehicle, at least one recharging point (16) arranged close to the track, a power supply infrastructure for the or each recharging point (16), capable of supplying the or each recharging point with a charging current, at least one collection member (P₁, P₂) carried by the vehicle by the vehicle and connected to said at least one energy storage element, said at least one collection member (P₁, P₂) and said at least one recharging point being suitable for cooperating to transmit the charge current, during a charging operation, to said at least one energy storage element,
the vehicle (20) being **characterised in that** it comprises a detection device (20) according to any one of the preceding claims.

6. The vehicle (10) according to claim 5, further comprising a vehicle control and monitoring system, in particular a railway vehicle, the detection device (20) being directly connected to the vehicle control and monitoring system, the vehicle control and monitoring system being configured to:
- receive, from the detection device (20), an item of information representative of the presence of at least one degradation of the said contact surface in the event of positive detection, and
- automatically select a collection member (P₁, P₂) of the vehicle opposite a non-degraded recharging point (16) to recharge the vehicle (10), and/or
- display an indicator obtained by odometry to the driver of the vehicle, the indicator being configured to guide the driver to stop the vehicle with a collection member of the vehicle opposite a non-degraded recharging point in order to recharge the vehicle, and/or
- activate a vehicle cleaning system configured to clean said contact surface detected as damaged; and/or
- record said item of information representative of the presence of at least one degradation of said contact surface in a memory space dedicated to storing event(s) associated with said vehicle and accessible remotely; and/or
- transmit a maintenance request, said maintenance request comprising the geographical coordinates of the vehicle associated with an instant t₁ when the image(s) of said contact surface were captured and delivered by a geolocation device on board the vehicle and also connected to the vehicle control and monitoring system.

7. A system for supplying electrical power to a vehicle (10), in particular a railway vehicle, capable of travelling on a track, in particular a railway track,
the power supply system comprising at least one energy storage element carried by the vehicle (10), at least one recharging point (16) arranged close to the track, a power supply infrastructure for the or each recharging point (16), capable of supplying the or each recharging point with a charging current, at least one collection member carried by the vehicle by the vehicle and connected to said at least one energy storage element, said at least one collection member and said at least one recharging point (16) being suitable for cooperating to transmit the charge current, during a charging operation, to said at least one energy storage element,
the power supply system being **characterized in that** it comprises, on each recharging point, at least one visual marker delimiting a detection zone with respect to a useful electrical contact surface corresponding to the surface that can actually be used for electrical contact, an image of the detection zone being suitable for being captured by the detection device (20) according to any one of claims 1 to 4.

8. The power supply system according to claim 7, wherein said at least one recharging point (16) is overhead or on the ground.

9. A method (38) for detecting at least one degradation (18) of a contact surface of at least one recharging point (16) of a system for supplying electrical power to a vehicle (10), in particular a rail vehicle, capable of travelling on a track, in particular a railway track,
the power supply system comprising at least one energy storage element carried by the vehicle (10), at least one recharging point (16) arranged close to the track, a power supply infrastructure for the or each recharging point, capable of supplying the or each recharging point (16) with a charging current, at least one collection member (P₁, P₂) carried by the vehicle by the vehicle and connected to said at least one energy storage element, said at least one collection member and said at least one recharging point (16) being suitable for cooperating to transmit the charge current, during a charging operation, to said at least one energy storage element,
the method (38) being **characterised in that** it is implemented by the vehicle according to claim 5 and **in that** it comprises the following steps implemented by the detection device on board said vehicle located in front of each collection member in the direction of travel of the vehicle:
- capturing images (42) of said contact surface,
- detecting, by processing (44) the captured image(s), the presence or absence of at least one degradation of said contact surface,
- transmitting (46), to a vehicle control and monitoring system, an item of information representative of the presence of at least one degradation of said contact surface in the event of positive detection;
and the following steps implemented by the vehicle control and monitoring system - receiving, from said detection device, said item of information representative of the presence of at least one degradation of said contact surface in the event of positive detection, and
- automatically selecting (S) a vehicle collection member opposite a non-degraded recharging point for recharging the vehicle, and/or
- displaying (I) an indicator obtained by odometry to the driver of the vehicle, the indicator being configured to guide the driver to stop the vehicle with a collection member of the vehicle opposite a non-degraded recharging point in order to recharge the vehicle,
and/or
- activating (N) a vehicle cleaning system configured to clean said contact surface detected as damaged; and/or
- recording said item of information representative of the presence of at least one degradation of said contact surface in a memory space dedicated to storing event(s) associated with said vehicle and accessible remotely; and/or
- transmitting (T_R_M) a maintenance request, said maintenance request comprising the geographical coordinates of the vehicle associated with a positive detection instant of said contact surface and delivered by a geolocation device on board the vehicle and also connected to the vehicle control and monitoring system.
